# EUROPÄISCHE PATENTSCHRIFT

(11) **EP 2 670 211 B1**
(45) Veröffentlichungstag und Bekanntmachung des Hinweises auf die Patenterteilung: **26.08.2026**
(21) Anmeldenummer: 13168895.4
(22) Anmeldetag: 23.05.2013
(51) Int. Cl.: H05B 1/02, H05B 6/06, H05B 6/12

(54) **Kochfeldvorrichtung**
Hotplate device
Dispositif de champ de cuisson

(30) Priorität: 31.05.2012 ES 201230831
(43) Veröffentlichungstag der Anmeldung: 04.12.2013
(73) Patentinhaber: BSH Hausgeräte GmbH, 81739 München (DE)
(72) Erfinder: Garcia Jimenez, Jose Ramon, 86316 Friedberg (DE); Llorente Gil, Sergio, 50009 Zaragoza (ES); Paesa García, David, 50015 Zaragoza (ES); Rivera Peman, Julio, 50410 Cuarte de Huerva (Zaragoza) (ES)

(56) Entgegenhaltungen:
- EP-A1- 2 413 659
- WO-A1-2009/049989
- WO-A1-2013/118027
- DE-A1- 102010 031 225
- DE-A1- 2 355 412

## Beschreibung

Die Erfindung geht aus von einer Kochfeldvorrichtung nach dem Oberbegriff des Anspruchs 1.

Es sind Kochfelder mit variabler Kochfläche bekannt.

Aus der deutschen Offenlegungsschrift DE 10 2010 031 225 A1 ist bereits ein Kochfeld mit einer Kochfeldplatte bekannt, auf welcher Zubereitungsbehälter zum Zubereiten von Lebensmitteln positionierbar sind. Das Kochfeld umfasst zudem eine Mehrzahl von Heizelementen, die unter der Kochfeldplatte angeordnet sind, wobei ein Heizelement jeweils unabhängig von anderen Heizelementen (13 bis 23) heizbar ist, und eine Positionserkennungs-Einrichtung zur Erkennung einer Position eines Zubereitungsbehälters auf der Kochfeldplatte. Des Weiteren umfasst das Kochfeld eine Steuereinheit, welche zur Aktivierung der Heizelemente abhängig von den Informationen der Positionserkennungs-Einrichtung ausgebildet ist, wobei eine gesamte mit den Heizelementen heizbare Zone auf der Kochfeldplatte eine Umfangsbegrenzung aufweist. Es ist eine Detektorvorrichtung vorgesehen, mittels welcher zumindest abschnittweise die Umfangsbegrenzung bezüglich eines Positionierens eines Zubereitungsbehälters auf der Umfangsbegrenzung erfassbar ist.

Aus der europäischen Patentanmeldung EP 2 413 659 A1 ist bereits ein Induktionsheizherd bekannt, aufweisend einen Temperatursensor, welcher zwischen mehreren Arbeitsspulen angeordnet ist, welche gleichmäßig unterhalb einer Kochfläche angeordnet sind, sowie ein Wärmeübertragerteil zur Übertragung von Wärme von den dem Temperatursensor benachbarten Spulen auf den Temperatursensor. WO2009/049989 A1 beschreibt eine Kochfeldvorrichtung gemäß dem Oberbegriff des Anspruchs 1.

Aus dem Dokument WO 2013/118027 A1 ist bereits ein Induktionskochfeld mit mehreren Induktionsheizeinheiten bekannt, die unter einer Kochfeldplatte angeordnet sind, wobei mindestens ein IR-Sensor unterhalb der Kochfeldplatte und seitlich neben den Induktionsheizeinheiten angeordnet ist.

Die Aufgabe der Erfindung besteht insbesondere darin, eine gattungsgemäße Vorrichtung mit verbesserten Eigenschaften hinsichtlich eines verbesserten Komforts bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Kochfeldvorrichtung, insbesondere einer Induktionskochfeldvorrichtung, die zumindest einen variablen Kochbereich und zumindest eine Steuereinheit aufweist.

Die Steuereinheit ist dazu vorgesehen, in zumindest einem Teilbereich des variablen Kochbereichs einen automatisierten Kochvorgang durchzuführen. Die Kochfeldvorrichtung weist zumindest eine Kochfeldplatte auf. Unter einem "variablen" Kochbereich soll ein Kochbereich auf der Kochfeldplatte verstanden werden, der zumindest eine Heizzone aufweist, die insbesondere in ihrer Position und/oder ihrer Form veränderbar ist. Unter einer "Heizzone" soll eine Zone verstanden werden, der, insbesondere über eine Steuereinheit und/oder eine Bedienerschnittstelle, eine Heizleistung zuordenbar ist, um ein darauf positioniertes Gargeschirr, beispielsweise einen Topf, eine Pfanne und/oder einen Bräter, zu erwärmen. Insbesondere weist die Kochfeldvorrichtung zumindest eine Heizeinheit mit einer Vielzahl von, insbesondere zumindest vier, vorteilhaft zumindest zehn, vorzugsweise zumindest zwanzig, insbesondere regelmäßig angeordneten, vorteilhaft sich von konzentrisch angeordneten Heizelementen unterscheidenden, Heizelementen auf, deren Positionen in ihrer Gesamtheit den variablen Kochbereich definieren, wobei benachbarte der Heizelemente vorzugsweise einen Abstand von maximal 5 cm, vorteilhaft maximal 3 cm, vorzugsweise maximal 1 cm, aufweisen. Insbesondere ist die Kochfeldvorrichtung als Matrixkochfeldvorrichtung ausgebildet. Insbesondere weist die Steuereinheit zumindest eine Gruppenbildungseinheit auf, die dazu vorgesehen ist, aus der Vielzahl an Heizelementen zumindest eine Gruppe an Heizelementen auszuwählen, die dazu vorgesehen ist, eine Heizzone zu bilden, die von der Gruppe an Heizelementen gemeinsam beheizt wird, wobei eine der Heizzone zugeordnete Heizleistung auf die Heizelemente der Gruppe aufgeteilt wird. Insbesondere weist der variable Kochbereich zumindest eine Sensoreinheit auf, die dazu vorgesehen ist, eine Position, Form und/oder Größe zumindest eines aufgestellten Gargeschirrs zu detektieren. Insbesondere ist die Gruppenbildungseinheit dazu vorgesehen, in Abhängigkeit von der durch die Sensoreinheit detektierten Form, Position und/oder Größe, eine Auswahl an Heizelementen der Vielzahl an Heizelementen zu bestimmen, die eine das Gargeschirr zu beheizende Heizzone bilden, deren Form, Position und/oder Größe der detektierten Form, Position und/oder Größe zumindest ähnelt. Alternativ ist es denkbar, dass der variable Kochbereich von einem erreichbaren Bereich zumindest eines beweglichen Heizelements, insbesondere von zumindest zwei, vorteilhaft von zumindest vier, beweglichen Heizelementen, definiert ist, die dazu vorgesehen sind, eine Heizzone einzeln oder gemeinsam zu beheizen, indem sie sich unter dieser bewegen.

Unter einem "Teilbereich" soll ein Bereich des variablen Kochbereichs verstanden werden, der sich über maximal 90 %, insbesondere maximal 60 %, vorteilhaft maximal 30 %, vorzugsweise maximal 10 %, des variablen Kochbereichs erstreckt. Insbesondere ist die Steuereinheit dazu vorgesehen, einen automatischen Kochvorgang für eine Heizzone zu unterstützen, wenn die Heizzone zumindest den Teilbereich umfasst. Unter einer "Steuereinheit" soll insbesondere eine elektronische Einheit verstanden werden, die vorzugsweise in einer Steuer- und/oder Regeleinheit eines Kochfelds zumindest teilweise integriert ist und die vorzugsweise dazu vorgesehen ist, zumindest eine Heizleistung der Heizelemente zu steuern und/oder zu regeln. Vorzugsweise umfasst die Steuereinheit eine Recheneinheit und insbesondere zusätzlich zur Recheneinheit eine Speichereinheit mit einem darin gespeicherten Steuer- und/oder Regelprogramm, das dazu vorgesehen ist, von der Recheneinheit ausgeführt zu werden. Vorzugsweise ist die Steuereinheit dazu vorgesehen, mit einer Bedienerschnittstelle zu interagieren.

Darunter, dass die Steuereinheit dazu vorgesehen ist, einen "automatisierten Kochvorgang" durchzuführen, soll erfindungsgemäß verstanden werden, dass die Steuereinheit dazu vorgesehen ist, in zumindest einem Betriebsmodus zumindest eine Heizleistung einer Heizzone unabhängig von einem Bedienereingriff, insbesondere in Abhängigkeit von zumindest einem Kochparameter, vorzugsweise zumindest in Abhängigkeit von einer Temperatur, insbesondere einer Gargeschirrtemperatur, anzupassen. Insbesondere ist die Steuereinheit dazu vorgesehen, die Heizleistung zeitlich zu regeln, um einen gewünschten, insbesondere durch Bedienereingaben konfigurierten, zeitlichen Verlauf, insbesondere einen konstanten Wert und/oder ein von einem konstanten Wert abweichenden Verlauf, des Kochparameters zumindest im Wesentlichen zu bewirken. Alternativ ist es denkbar, dass die Steuereinheit dazu vorgesehen ist, eine Heizleistung der Heizzone entsprechend eines vorgegebenen, insbesondere bedienerkonfigurierten, zeitlichen Verlaufs der Heizleistung einzustellen. Es kann insbesondere ein erhöhter Komfort erreicht werden. Insbesondere kann ein unbeaufsichtigter Kochvorgang erreicht werden.

Die Kochfeldvorrichtung weist zumindest eine Sensoreinheit auf, die dazu vorgesehen ist, die Steuereinheit bei einem automatisierten Kochvorgang zu unterstützen und die sich zumindest in dem einen Teilbereich durch eine erhöhte Qualität auszeichnet. Unter einer "Sensoreinheit" soll insbesondere eine Einheit verstanden werden, die zumindest ein Sensorelement aufweist. Unter einem "Sensorelement" soll insbesondere ein elektronisches Element verstanden werden, das dazu vorgesehen ist, eine zu messende Größe, insbesondere eine Temperatur und/oder eine Strahlungskenngröße, in eine elektrisch auswertbare Größe, insbesondere in eine Kapazität, einen Widerstand, eine Spannung, einen Strom, eine Frequenz und/oder eine Induktivität, umzuwandeln. Insbesondere ist das Sensorelement als temperaturabhängiger Widerstand oder als Photodiode, insbesondere als IR-Photodiode, ausgebildet. Insbesondere weist die Sensoreinheit zumindest eine Auswerteelektronik auf, die dazu vorgesehen ist, einem Wert der elektrisch auswertbaren Größe einen Wert der zu messenden Größe zuzuordnen. Insbesondere ist die Sensoreinheit dazu vorgesehen, die elektrisch auswertbare Größe und/oder einen zugeordneten Wert der zu messenden Größe in Form eines, vorzugsweise digitalen, elektrischen Signals an die Steuereinheit weiterzuleiten. Die Sensoreinheit ist dazu vorgesehen, zumindest in dem Teilbereich eine Temperatur eines auf die Kochfeldplatte aufgestellten Gargeschirrs zu messen. Darunter, dass die Sensoreinheit dazu vorgesehen ist, einen automatischen Kochvorgang zu "unterstützen", soll insbesondere verstanden werden, dass die Sensoreinheit dazu vorgesehen ist, Messwerte zu liefern, in deren Abhängigkeit die Steuereinheit eine Heizleistung des automatischen Kochvorgangs festlegt. Es kann insbesondere ein sicherer und/oder komfortabler automatischer Kochvorgang erreicht werden. Es kann insbesondere eine verringerte Bauteilzahl erreicht werden.

Die Sensoreinheit weist, in dem zumindest einen Teilbereich, eine erhöhte Sensordichte auf. Erfindungsgemäß weist die Sensoreinheit in dem Teilbereich des variablen Kochbereich eine Sensordichte auf, die zumindest 10 %, vorteilhaft zumindest 30 %, besonders vorteilhaft zumindest 50 %, vorzugsweise zumindest 70 %, größer ist als in zumindest einem anderen Teilbereich des variablen Kochbereichs. Insbesondere weist ein vorzugsweise kreisförmiger Bereich, der vorteilhaft zumindest den einen Teilbereich umfasst und insbesondere einen Durchmesser von maximal 30 cm, insbesondere maximal 25 cm, vorteilhaft maximal 20 cm, vorzugsweise maximal 15 cm, aufweist, zumindest 3, insbesondere zumindest 4, vorteilhaft zumindest 5, vorteilhaft zumindest 6, vorzugsweise zumindest 7, Sensorelemente, insbesondere Temperatursensoren, auf. Es kann insbesondere eine geringe Bauteilzahl erreicht werden, indem außerhalb des zumindest einen Teilbereichs auf zumindest einen Teil der Sensorelemente verzichtet wird.

Erfindungsgemäß weist die Sensoreinheit in dem zumindest einen Teilbereich zumindest ein Sensorelement auf, das präziser ist als zumindest ein weiteres Sensorelement der Sensoreinheit. Unter einem "präziseren" Sensorelement soll insbesondere ein Sensorelement verstanden werden, das gegenüber dem weiteren Sensorelement weniger Träge, also insbesondere schneller gegenüber zeitlichen Änderungen der zu messenden Größe, und/oder direkter, also insbesondere mit geringeren und/oder besser einzuschätzenden Störfaktoren, die eine Messung verfälschen können, ist. Insbesondere ist das präzisere Sensorelement als Infrarotsensor ausgebildet. Insbesondere ist das weitere Sensorelement als temperaturabhängiger Widerstand, insbesondere als Heißleiter, ausgebildet. Es kann insbesondere eine geringe Bauteilanzahl erreicht werden, wobei insbesondere eine Großzahl an weiteren Sensorelementen durch eine geringe Zahl präziserer Sensorelemente ersetzt wird. Insbesondere kann eine verbesserte Genauigkeit und/oder eine verbesserte Steuerung erreicht werden.

Weiterhin wird vorgeschlagen, dass die Kochfeldvorrichtung zumindest eine Indikationseinheit aufweist, die dazu vorgesehen ist, zumindest den einen Teilbereich, in dem ein automatisierter Kochvorgang möglich ist, zu kennzeichnen. Insbesondere ist die Indikationseinheit als visuelle Einheit, insbesondere als passive Einheit, insbesondere als Beschriftung, Aufdruck, Markierung, Laserinnengravur, Serigrafie und/oder Vergleichbares auf, in und/oder unter der Kochfeldplatte, alternativ als aktive Einheit, insbesondere mit zumindest einem Leuchtelement, insbesondere einer Diode, ausgebildet. Weiterhin ist es denkbar, dass die Indikationseinheit über eine Bedienerschnittstelleneinheit, beispielsweise ein Display und die Steuereinheit realisiert ist, wobei die Steuereinheit insbesondere dazu vorgesehen ist, über die Bedienerschnittstelleneinheit eine Positionskorrektur für ein aufgestelltes Gargeschirr auszugeben, damit ein Bediener das Gargeschirr in den Teilbereich bewegt. Es kann insbesondere ein verbesserter Komfort erreicht werden.

Ferner wird vorgeschlagen, dass die Kochfeldvorrichtung zumindest eine Prüfeinheit aufweist, die dazu vorgesehen ist, eine Bedeckung des Teilbereichs festzustellen. Insbesondere ist die Prüfeinheit dazu vorgesehen, eine Bedeckung der Indikationseinheit festzustellen. Insbesondere ist die Prüfeinheit einstückig ausgebildet mit der Sensoreinheit, insbesondere der Heizeinheit, die dazu vorgesehen ist, eine Größe, Position und/oder Form eines aufgestellten Gargeschirrs zu detektieren, und/oder mit der Sensoreinheit, die zu einer Unterstützung des automatischen Kochvorgangs vorgesehen ist. Darunter, dass eine erste und eine zweite Einheit "einstückig" ausgebildet sind, soll insbesondere verstanden werden, dass zumindest ein Element der ersten Einheit auch Teil der zweiten Einheit ist, wodurch insbesondere eine Bauteilersparnis erreicht werden kann. Es kann insbesondere ein sicherer Betrieb erreicht werden.

Weiterhin wird vorgeschlagen, dass die Steuereinheit dazu vorgesehen ist, eine Aktivierung des automatisierten Kochvorgangs in Abhängigkeit von einer Bedeckung des Teilbereichs zu erlauben. Insbesondere ist die Steuereinheit dazu vorgesehen, einem Bediener über eine Bedienerschnittstelle erst dann einen automatischen Kochvorgang als Auswahlmöglichkeit vorzuschlagen, wenn ein hinreichender Grad der Bedeckung erreicht ist. Alternativ ist es denkbar, dass die Steuereinheit dazu vorgesehen ist, bei unzureichender Bedeckung des Teilbereichs und bei einer versuchten Aktivierung des automatischen Kochvorgangs eine Aktivierung zu vermeiden und/oder ein Warnsignal auszugeben. Es kann insbesondere ein sicherer Betrieb erreicht werden.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:
- Fig. 1: ein erfindungsgemäßes Kochfeld in einer schematischen Ansicht von oben,
- Fig. 2: ein zweites erfindungsgemäßes Kochfeld in einer schematischen Ansicht von oben und
- Fig.3: ein weiteres erfindungsgemäßes Kochfeld in einer schematischen Ansicht von oben.

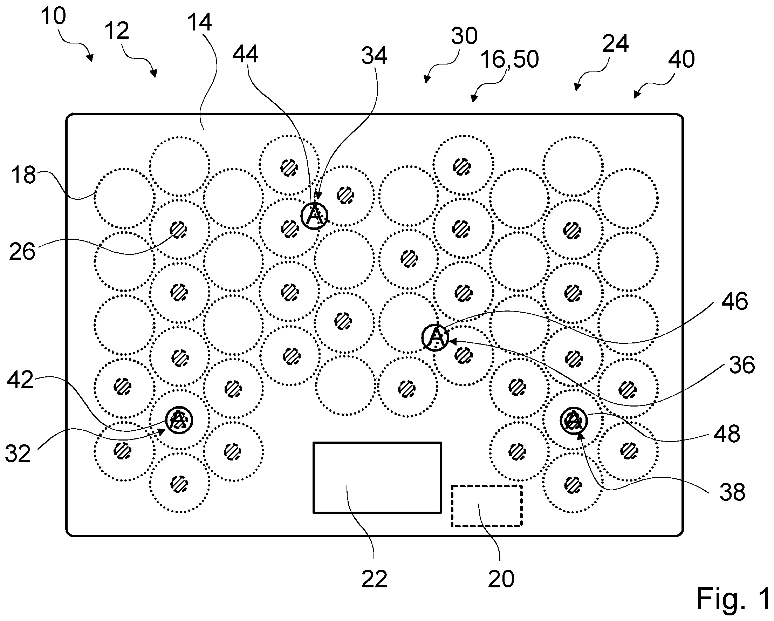

Figur 1 zeigt ein als Induktionskochfeld ausgebildetes Kochfeld 10 mit einer als Induktionskochfeldvorrichtung ausgebildeten Kochfeldvorrichtung 12. Die Kochfeldvorrichtung 12 weist einen variablen Kochbereich 30 und eine Steuereinheit 20 auf. Die Steuereinheit 20 ist an eine Bedienerschnittstelle 22 angebunden. Die Bedienerschnittstelle 22 ist als berührungsempfindliches Display ausgebildet. Die Steuereinheit 20 ist dazu vorgesehen, in vier Teilbereichen 32, 34, 36, 38 des variablen Kochbereichs 30 automatisierte Kochvorgänge durchzuführen.

Der variable Kochbereich 30 ist von einer Heizeinheit 16 gebildet. Die Heizeinheit 16 ist von 48 Heizelementen 18 gebildet. Die Heizelemente 18 sind unter einer Kochfeldplatte 14 angeordnet. Die Heizelemente 18 weisen in Aufsicht jeweils eine runde Form auf. Die Heizelemente 18 sind im Wesentlichen in einem hexagonalen Raster angeordnet. Die Heizeinheit 16 umgibt einen Bereich, in dem die Bedienerschnittstelle 22 angeordnet ist. Ein erster und ein vierter der Teilbereiche 32, 38 sind an einer Vorderseite der Kochfeldplatte 14 angeordnet. Der erste und der vierte Teilbereich 32, 38 ist jeweils von einer Mitte eines Heizelements 18 gebildet, das von sechs weiteren Heizelementen 18 umringt ist. Der Ring der Heizelemente 18, der den ersten Teilbereich 32 umgibt, ist an einer linken und einer vorderen Kante des variablen Kochbereichs 30 angeordnet. Der Ring der Heizelemente 18, der den vierten Teilbereich 38 umgibt, ist an einer rechten und einer vorderen Kante des variablen Kochbereichs 30 angeordnet. Ein zweiter und dritter der Teilbereiche 34, 36 ist jeweils zwischen zwei Heizelementen 18 zentriert. Der zweite Teilbereich 34 ist in Flucht mit einer linken Seitenkante der Bedienerschnittstelle 22 in einem Nahbereich einer hinteren Kante des Kochbereichs 30 angeordnet. Der dritte Teilbereich 36 ist in Flucht mit einer rechten Seitenkante der Bedienerschnittstelle 22 in einem Nahbereich der Bedienerschnittstelle 22 angeordnet.

Die Kochfeldvorrichtung 12 weist eine Sensoreinheit 24 auf, die dazu vorgesehen ist, die Steuereinheit 20 bei einem automatisierten Kochvorgang zu unterstützen und die sich in den Teilbereichen 32, 34, 36, 38 durch eine erhöhte Qualität auszeichnet. Die Sensoreinheit 24 ist dazu vorgesehen, eine für den automatischen Kochvorgang als Regelgröße notwendige Temperatur eines in dem Teilbereich 32, 34, 36, 38 platzierten Gargeschirrs zu bestimmen. Die Sensoreinheit 24 weist 30 Sensorelemente 26 auf. Die Sensoreinheit 24 weist in den Teilbereichen 32, 34, 36, 38 eine erhöhte Sensordichte auf. Die Sensorelemente 26 sind jeweils in Zentren der Heizelemente 18 angeordnet. Der erste und der vierte Teilbereich 32, 38 weisen in ihrer Mitte je ein Sensorelement 26 auf. Die Heizelemente 18, die den ersten bzw. vierten Teilbereich 32, 38 umringen, weisen jeweils ein Sensorelement 26 auf. Die Sensorelemente 26 sind jeweils als Heißleiter ausgebildet. In Flucht mit dem ersten bzw. vierten Teilbereich 32, 38 nach hinten liegt unter anderem ein erstes und ein zweites Heizelement 18 mit jeweils einem Sensorelement 26, das jeweils von sechs Heizelementen 18 umringt ist, wobei von den sechs Heizelementen 18, die das erste Heizelement 18 umringen, lediglich zwei ein Sensorelement 26 aufweisen, und von den sechs Heizelementen 18, die das zweite Heizelement 18 umringen, lediglich eines ein Sensorelement 26 aufweist. Die weit von den Teilbereichen 32, 34, 36, 38 entfernten Sensorelemente 26 dienen im Wesentlichen einem Überhitzungsschutz in einem normalen Betrieb, können aber auch bei einem automatischen Kochvorgang mit sehr großen Gargeschirren zur Unterstützung des automatischen Kochvorgangs ausgewertet werden.

Weiterhin weist die Kochfeldvorrichtung 12 eine Indikationseinheit 40 auf, die dazu vorgesehen ist, die Teilbereiche 32, 34, 36, 38 zu kennzeichnen. Die Indikationseinheit 40 weist vier Kennzeichnungsmittel 42, 44, 46, 48 auf, die dazu vorgesehen sind, jeweils einen der Teilbereiche 32, 34, 36, 38 zu kennzeichnen. Die Indikationseinheit 40 ist von einer Bedruckung der Kochfeldplatte 14 gebildet. Die Kennzeichnungsmittel 42, 44, 46, 48 stellen jeweils ein eingekreistes A dar.

Ferner weist die Kochfeldvorrichtung 12 eine Prüfeinheit 50 auf, die dazu vorgesehen ist, Bedeckungen der Teilbereiche 32, 34, 36, 38 festzustellen. Die Prüfeinheit 50 ist dazu vorgesehen, eine Bedeckung der Indikationseinheit 40 bzw. der Kennzeichnungsmittel 42, 44, 46, 48 festzustellen. Die Prüfeinheit 50 ist mit der Heizeinheit 16 einstückig ausgebildet. Die Prüfeinheit 50 stellt durch Induktivitätsmessungen über die als Induktoren ausgebildeten Heizelemente 18 eine Bedeckung der Heizelemente 18 und somit der Indikationseinheit 40 fest. Ist beispielsweise das Heizelement 18, das mittig unter dem ersten bzw. vierten Teilbereich 32, 38 angeordnet ist, zu 70 % bedeckt, ist von einer Bedeckung des Teilbereichs 32, 38 auszugehen. Sind beispielsweise die zwei Heizelemente 18, zwischen denen der zweite Teilbereich 34 angeordnet ist, zu je 60 % bedeckt, ist von einer Bedeckung des Teilbereichs 34 auszugehen.

Die Steuereinheit 20 ist dazu vorgesehen, eine Aktivierung des automatisierten Kochvorgangs in Abhängigkeit von einer Bedeckung des jeweiligen Teilbereichs 32, 34, 36, 38 zu erlauben.

Weiterhin sind Ausgestaltungen mit anderen Heizelementen als Induktionsheizelementen, insbesondere mit Strahlungsheizelementen und/oder Widerstandsheizelementen denkbar, wobei hierbei Sensorelemente bevorzugt zwischen den Heizelementen angeordnet sind. Weiterhin ist es denkbar, dass eine Prüfeinheit von einer zusätzlichen, insbesondere optischen, Detektionseinheit gebildet ist, die von der Heizeinheit und von der Sensoreinheit verschieden ist.

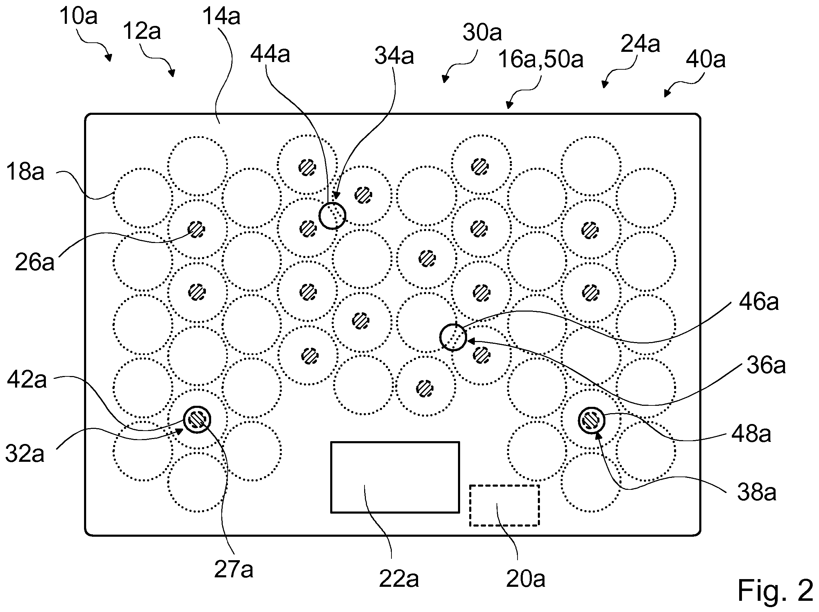

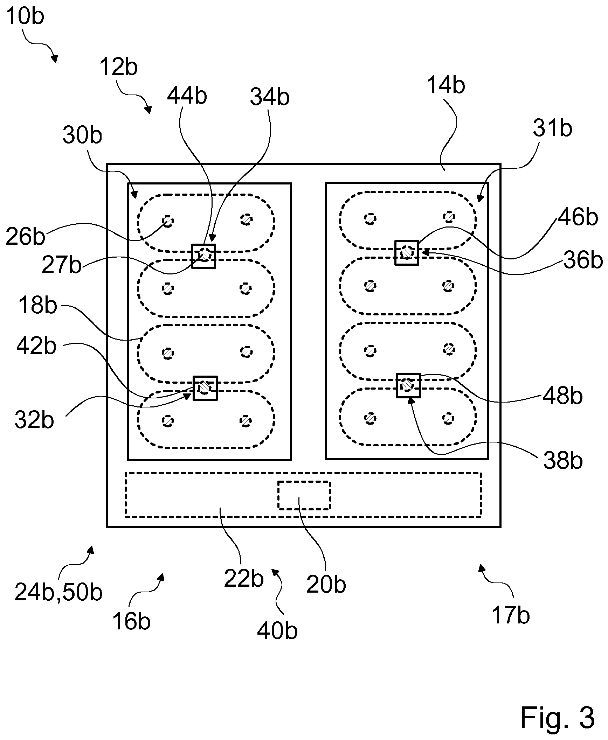

In den Figuren 2 und 3 sind zwei weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung der anderen Ausführungsbeispiele, insbesondere der Figur 1, verwiesen werden kann. Zur Unterscheidung der Ausführungsbeispiele ist der Buchstabe a bzw. b an die Bezugszeichen des Ausführungsbeispiels in der Figuren 2 bzw. 3 angefügt. Bezüglich gleich bezeichneter Bauteile, insbesondere in Bezug auf Bauteile mit gleichen Bezugszeichen, kann grundsätzlich auch auf die Zeichnungen und/oder die Beschreibung der anderen Ausführungsbeispiele, insbesondere der Figur 1, verwiesen werden.

Figur 2 zeigt ein Kochfeld 10a mit einer Kochfeldvorrichtung 12a in Abwandlung des Kochfelds 10 aus Figur 1. Ein erster und ein vierter Teilbereich 32a, 38a sind an einer Vorderseite der Kochfeldplatte 14a angeordnet. Der erste und der vierte Teilbereich 32a, 38a ist jeweils von einer Mitte eines Heizelements 18a gebildet, das von sechs weiteren Heizelementen 18a umringt ist. Der Ring der Heizelemente 18a, der den ersten Teilbereich 32a umgibt, ist an einer linken und einer vorderen Kante des variablen Kochbereichs 30a angeordnet. Der Ring der Heizelemente 18a, der den vierten Teilbereich 38a umgibt, ist an einer rechten und einer vorderen Kante des variablen Kochbereichs 30a angeordnet. Die Kochfeldvorrichtung 12a weist eine Sensoreinheit 24a auf, die dazu vorgesehen ist, die Steuereinheit 20a bei einem automatisierten Kochvorgang zu unterstützen und die sich in den Teilbereichen 32a, 34a, 36a, 38a durch eine erhöhte Qualität auszeichnet. Die Sensoreinheit 24a weist zwei Sensorelemente 27a (Schraffur nach links oben) und 16 weitere Sensorelemente 26a (Schraffur nach rechts oben) auf. Die zwei Sensorelemente 27a sind als IR-Photodetektoren ausgebildet. Die weiteren Sensorelemente 26a sind als Heißleiter ausgebildet. Die Sensoreinheit 24a weist in den Teilbereichen 32a, 38a jeweils ein Sensorelement 27a auf, das präziser ist als die weiteren Sensorelemente 26a der Sensoreinheit 24. Die Sensoreinheit 24a weist in den Teilbereichen 34a, 36a eine erhöhte Sensordichte auf. Die Sensorelemente 26a, 27a sind jeweils in Zentren der Heizelemente 18a angeordnet. Der erste und der vierte Teilbereich 32a, 38a weisen in ihrer Mitte je eins der zwei Sensorelemente 27a auf. Die Heizelemente 18a, die den ersten bzw. vierten Teilbereich 32a, 38a umringen, weisen jeweils kein Sensorelement auf. In Flucht mit dem ersten bzw. vierten Teilbereich 32a, 38a nach hinten liegen unter anderem zwei Heizelemente 18a mit jeweils einem weiteren Sensorelement 26a, die jeweils von sechs Heizelementen 18a umringt sind, wobei von den sechs Heizelementen 18a lediglich eines ein weiteres Sensorelement 26a aufweist.

In weiteren Ausgestaltungen ist es denkbar, dass unter jedem der Teilbereiche ein IR-Photodetektor angeordnet ist. Es kann insbesondere komplett auf Heißleiter bzw. temperaturabhängige Widerstände verzichtet werden, wobei vorteilhaft zumindest ein paar von diesen zu Sicherheitszwecken vorhanden bleiben. Ferner ist denkbar, dass die Sensoreinheit in den Teilbereichen sowohl eine erhöhte Sensordichte als auch zumindest einen präziseren Sensor aufweist.

Figur 3 zeigt ein Kochfeld 10b mit einer Kochfeldvorrichtung 12b. Die Kochfeldvorrichtung 12b weist zwei variable Kochbereiche 30b, 31b und eine Steuereinheit 20b auf. Die Steuereinheit 20b ist dazu vorgesehen, in je zwei Teilbereichen 32b, 34b bzw. 36b, 38b der variablen Kochbereiche 30b, 31b automatische Kochvorgänge durchzuführen. Die Kochfeldvorrichtung 12b weist zwei Heizeinheiten 16b, 17b auf, die jeweils dazu vorgesehen sind, einen der variablen Kochbereiche 30b, 31b zu bilden. Die Heizeinheiten 16b, 17b weisen jeweils vier Heizelemente 18b auf. Die Heizelemente 18b sind oval ausgebildet und weisen eine Länge auf, die doppelt so groß ist wie ihre Breite. Die Heizelemente 18b einer Heizeinheit 16b, 17b sind längsseits nebeneinander angeordnet. Die Heizeinheit 16b bildet den linken variablen Kochbereich 30b. Die Heizeinheit 17b bildet den rechten variablen Kochbereich 31b. Die variablen Kochbereiche 30b, 31b sind jeweils durch eine aufgedruckte Einrahmung gegeneinander abgegrenzt. Die Teilbereiche 32b, 34b, 36b, 38b sind jeweils mittig zwischen zwei Heizelementen 18b eines Kochbereichs 30b, 31b angeordnet, wobei jedes der Heizelemente 18b an genau einem Teilbereich 32b, 34b, 36b, 38b anliegt.

Weiterhin weist die Kochfeldvorrichtung 12b eine Sensoreinheit 24b auf, die dazu vorgesehen ist, die Steuereinheit 20b bei einem automatisierten Kochvorgang zu unterstützen und die sich in den Teilbereichen 32b, 34b, 36b, 38b durch eine erhöhte Qualität auszeichnet. Die Sensoreinheit 24b weist in den Teilbereichen 32b, 34b, 36b, 38b jeweils ein Sensorelement 27b (Schraffur nach links oben) auf, das präziser ist als weitere Sensorelemente 26b (Schraffur nach rechts oben) der Sensoreinheit 24b. Die Sensorelemente 27b sind als IR-Photodetektoren ausgebildet. Die weiteren Sensorelemente 26b sind als Heißleiter ausgebildet, die von unten an einer Kochfeldplatte 14b angeklebt sind. Die weiteren Sensorelemente 26b sind jeweils in Krümmungsmittelpunkten der Heizelemente 18b angeordnet. Ferner weist die Kochfeldvorrichtung 12b eine Indikationseinheit 40b auf, die dazu vorgesehen ist, die Teilbereiche 32b, 34b, 36b, 38b, in denen ein automatisierter Kochvorgang möglich ist, zu kennzeichnen. Die Indikationseinheit 40b weist vier als LEDs ausgebildete Kennzeichnungsmittel 42b, 44b, 46b, 48b auf. Die Kennzeichnungsmittel 42b, 44b, 46b, 48b stellen jeweils einen leuchtenden Rand eines Quadrats dar. Die Kennzeichnungsmittel 42b, 44b, 46b, 48b bilden die Teilbereiche 32b, 34b, 36b, 38b. Weiterhin weist die Kochfeldvorrichtung 12b eine Prüfeinheit 50b auf, die dazu vorgesehen ist, eine Bedeckung der jeweiligen Teilbereiche 32b, 34b, 36b, 38b festzustellen. Die Prüfeinheit 50b ist einstückig ausgebildet mit der Sensoreinheit 24b. Die Steuereinheit 20b ist dazu vorgesehen, anhand von Signalen der IR-Photodetektoren, eine Bedeckung der Teilbereiche 32b, 34b, 36b, 38b festzustellen.

### Bezugszeichen

- 10: Kochfeld
- 12: Kochfeldvorrichtung
- 14: Kochfeldplatte
- 16: Heizeinheit
- 17: Heizeinheit
- 18: Heizelement
- 20: Steuereinheit
- 22: Bedienerschnittstelle
- 24: Sensoreinheit
- 26: Sensorelement
- 27: Sensorelement
- 30: Kochbereich
- 31: Kochbereich
- 32: Teilbereich
- 34: Teilbereich
- 36: Teilbereich
- 38: Teilbereich
- 40: Indikationseinheit
- 42: Kennzeichnungsmittel
- 44: Kennzeichnungsmittel
- 46: Kennzeichnungsmittel
- 48: Kennzeichnungsmittel
- 50: Prüfeinheit

## Patentansprüche

1. Kochfeldvorrichtung, insbesondere Induktionskochfeldvorrichtung, die zumindest eine Kochfeldplatte (14; 14a; 14b), zumindest einen variablen Kochbereich (30; 30a; 30b, 31b), welcher zumindest eine Heizzone aufweist, der eine Heizleistung zuordenbar ist, um ein darauf positioniertes Gargeschirr zu erwärmen, zumindest eine Steuereinheit (20; 20a; 20b) und zumindest eine Sensoreinheit (24; 24a; 24b) aufweist, wobei die Steuereinheit (20; 20a; 20b) dazu vorgesehen ist, in zumindest einem Teilbereich (32, 34, 36, 38; 32a, 34a, 36a, 38a; 32b, 34b, 36b, 38b) des variablen Kochbereichs (30; 30a; 30b, 31b) einen automatisierten Kochvorgang durchzuführen, und dabei in zumindest einem Betriebsmodus zumindest eine Heizleistung der Heizzone unabhängig von einem Bedienereingriff anzupassen, und wobei die Sensoreinheit (24; 24a; 24b) dazu vorgesehen ist, die Steuereinheit (20; 20a; 20b) bei einem automatisierten Kochvorgang zu unterstützen, **dadurch gekennzeichnet, dass** der Teilbereich (32, 34, 36, 38; 32a, 34a, 36a, 38a; 32b, 34b, 36b, 38b) sich über maximal 90 % des variablen Kochbereichs (30; 30a; 30b, 31b) erstreckt und die Sensoreinheit (24; 24a; 24b) sich zumindest in dem einen Teilbereich (32, 34, 36, 38; 32a, 34a, 36a, 38a; 32b, 34b, 36b, 38b) durch eine erhöhte Qualität auszeichnet, wobei die Sensoreinheit (24, 24a, 24b) in dem Teilbereich (32, 34, 36, 38) eine erhöhte Sensordichte oder zumindest ein Sensorelement (27a; 27b) aufweist, das präziser ist als zumindest ein weiteres Sensorelement (26a; 26b) der Sensoreinheit (24; 24a; 24b), wobei die Sensoreinheit (24; 24a; 24b) dazu vorgesehen ist, zumindest in dem Teilbereich eine Temperatur eines auf die Kochfeldplatte (14; 14a; 14b) aufgestellten Gargeschirrs zu messen.

2. Kochfeldvorrichtung nach einem der vorhergehenden Ansprüche,
**gekennzeichnet durch** zumindest eine Indikationseinheit (40; 40a; 40b), die dazu vorgesehen ist, zumindest den einen Teilbereich (32, 34, 36, 38; 32a, 34a, 36a, 38a; 32b, 34b, 36b, 38b), in dem ein automatisierter Kochvorgang möglich ist, zu kennzeichnen.

3. Kochfeldvorrichtung nach einem der vorhergehenden Ansprüche,
**gekennzeichnet durch** zumindest eine Prüfeinheit (50; 50a; 50b), die dazu vorgesehen ist, eine Bedeckung des Teilbereichs (32, 34, 36, 38; 32a, 34a, 36a, 38a; 32b, 34b, 36b, 38b) festzustellen.

4. Kochfeldvorrichtung nach den Ansprüchen 2 und 3, **dadurch gekennzeichnet, dass** die Prüfeinheit (50; 50a; 50b) dazu vorgesehen ist, eine Bedeckung der Indikationseinheit (40; 40a; 40b) festzustellen.

5. Kochfeldvorrichtung zumindest nach Anspruch 3, **dadurch gekennzeichnet, dass** die Steuereinheit (20; 20a; 20b) dazu vorgesehen ist, eine Aktivierung des automatisierten Kochvorgangs in Abhängigkeit von einer Bedeckung des Teilbereichs (32, 34, 36, 38; 32a, 34a, 36a, 38a; 32b, 34b, 36b, 38b) zu erlauben.

6. Kochfeld mit einer Kochfeldvorrichtung (12; 12a; 12b) nach einem der vorhergehenden Ansprüche.

## Claims

1. Hob apparatus, in particular induction hob apparatus, which has at least one hob plate (14; 14a; 14b), at least one variable cooking region (30; 30a; 30b, 31b), which has at least one heating zone that can be assigned a heating power in order to heat an item of cookware that is positioned thereon, at least one control unit (20; 20a; 20b) and at least one sensor unit (24; 24a; 24b), wherein the control unit (20; 20a; 20b) is provided to perform an automated cooking procedure in at least one subregion (32, 34, 36, 38; 32a, 34a, 36a, 38a; 32b, 34b, 36b, 38b) of the variable cooking region (30; 30a; 30b, 31b), and in doing so, in at least one operating mode, to adapt at least one heating power of the heating zone independently of a user intervention, and wherein the sensor unit (24; 24a; 24b) is provided to support the control unit (20; 20a; 20b) during an automated cooking procedure, **characterised in that** the subregion (32, 34, 36, 38; 32a, 34a, 36a, 38a; 32b, 34b, 36b, 38b) extends over at most 90 % of the variable cooking region (30; 30a; 30b, 31b) and the sensor unit (24; 24a; 24b) is distinguished by an increased quality at least in the one subregion (32, 34, 36, 38; 32a, 34a, 36a, 38a; 32b, 34b, 36b, 38b), wherein the sensor unit (24; 24a; 24b) in the subregion (32, 34, 36, 38) has an increased sensor density or at least one sensor element (27a; 27b) that is more precise than at least one further sensor element (26a; 26b) of the sensor unit (24; 24a; 24b), wherein the sensor unit (24; 24a; 24b) is provided to measure a temperature of an item of cookware placed on the hob plate (14; 14a; 14b), at least in the subregion.

2. Hob apparatus according to one of the preceding claims, **characterised by** at least one indication unit (40; 40a; 40b), which is provided to mark at least the one subregion (32, 34, 36, 38; 32a, 34a, 36a, 38a; 32b, 34b, 36b, 38b), in which an automated cooking procedure is possible.

3. Hob apparatus according to one of the preceding claims, **characterised by** at least one checking unit (50; 50a; 50b), which is provided to specify a coverage of the subregion (32, 34, 36, 38; 32a, 34a, 36a, 38a; 32b, 34b, 36b, 38b).

4. Hob apparatus according to one of claims 2 and 3, **characterised in that** the checking unit (50; 50a; 50b) is provided to specify a coverage of the indication unit (40; 40a; 40b).

5. Hob apparatus at least according to claim 3, **characterised in that** the control unit (20; 20a; 20b) is provided to allow an activation of the automated cooking procedure as a function of a coverage of the subregion (32, 34, 36, 38; 32a, 34a, 36a, 38a; 32b, 34b, 36b, 38b).

6. Hob with a hob apparatus (12; 12a; 12b) according to one of the preceding claims.

## Revendications

1. Dispositif de table de cuisson, en particulier dispositif de table de cuisson à induction, qui comprend au moins une plaque de cuisson (14 ; 14a ;14b), au moins une zone de cuisson variable (30 ; 30a ; 30b, 31b), laquelle comprend au moins une zone de chauffage, à laquelle peut être associé une puissance de chauffage afin de réchauffer l'ustensile de cuisson posé dessus, au moins une unité de commande (20 ; 20a ; 20b) et au moins une unité de capteur (24 ;24a ; 24b), dans lequel l'unité de commande (20 ; 20a ; 20b) est prévue pour mettre en œuvre un processus de cuisson automatique dans au moins une région partielle (32, 34, 36, 38 ; 32a, 34a, 36a, 38a ; 32b, 34b, 36b, 38b) de la zone de cuisson variable (30 ; 30a, 30b, 31b), et pour se faisant adapter dans au moins un mode de fonctionnement au moins une puissance de chauffage de la zone de chauffage indépendamment d'une intervention d'un opérateur, et dans lequel l'unité de capteur (24 ;24a ; 24b) est prévue pour soutenir l'unité de commande (20 ; 20a ; 20b) lors du processus de cuisson automatique, **caractérisé en ce que** la région partielle (32, 34, 36, 38 ; 32a, 34a, 36a, 38a ; 32b, 34b, 36b, 38b) s'étend sur 90% de la zone de cuisson variable (30 ; 30a, 30b, 31b) au maximum et l'unité de capteur (24 ;24a ; 24b) se distingue au moins dans la région partielle (32, 34, 36, 38 ; 32a, 34a, 36a, 38a ; 32b, 34b, 36b, 38b) par une qualité supérieure, dans lequel l'unité de capteur (24 ;24a ; 24b) présente, dans la région partielle (32, 34, 36, 38), une densité de capteurs supérieure ou au moins un élément de capteur (27a ; 27b), qui est plus précis qu'au moins un autre élément de capteur (26a ; 26b) de l'unité de capteur (24 ; 24a ; 24b), dans lequel l'unité de capteur (24 ; 24a ; 24b) est prévue pour mesurer, au moins dans la région partielle une température d'un ustensile de cuisson posé sur la plaque de cuisson (14 ; 14a ;14b).

2. Dispositif de table de cuisson selon l'une quelconque des revendications précédentes, **caractérisé par** au moins une unité d'indication (40 ; 40a ; 40b), laquelle est prévue pour caractériser au moins dans une région partielle (32, 34, 36, 38 ; 32a, 34a, 36a, 38a ; 32b, 34b, 36b, 38b), dans laquelle un processus de cuisson automatique est possible.

3. Dispositif de table de cuisson selon l'une quelconque des revendications précédentes, **caractérisé par** au moins une unité de contrôle (50 ; 50a ; 50b), laquelle est prévue de constater un recouvrement de la région partielle (32, 34, 36, 38 ; 32a, 34a, 36a, 38a ; 32b, 34b, 36b, 38b).

4. Dispositif de table de cuisson selon les revendications 2 et 3, **caractérisé en ce que** l'unité de contrôle (50 ; 50a ; 50b) est prévue pour constater un recouvrement de l'unité d'indication (40 ; 40a ; 40b).

5. Dispositif de table de cuisson selon la revendication 3, **caractérisé en ce que** l'unité de commandé (20 ; 20a ; 20b) est prévu pour autoriser une activation du processus de cuisson automatique en fonction d'un recouvrement de la région partielle (32, 34, 36, 38 ; 32a, 34a, 36a, 38a ; 32b, 34b, 36b, 38b).

6. Table de cuisson avec un dispositif de table de cuisson (12 ; 12a ; 12b) selon l'une quelconque des revendications précédentes.
